# DEMANDE DE BREVET EUROPEEN

(11) **EP 4 793 119 A1**
(43) Date de publication de la demande: **19.08.2026**
(21) Numéro de dépôt: 26154433.2
(22) Date de dépôt: 27.01.2026
(51) Int. Cl.: B60T 17/04

(54) **SYSTEME DE FREINAGE DE VEHICULE AUTOMOBILE AVEC TUBE DE PRESSION HYDRAULIQUE FIXE SUR UN RECEPTEUR DE FREINAGE**

(30) Priorité: 17.02.2025 FR 2501623
(71) Demandeur: Stellantis Auto SAS, 78300 Poissy (FR)
(72) Inventeur: AFRIAD, IDRISS, 20270 CASABLANCA (MA); TLEMCANI, MOAD, 20270 CASABLANCA (MA)
(74) Mandataire: BCIP

(57) **Abrégé**

Système de freinage de véhicule automobile comportant un récepteur de freinage (2) présentant sur un plan (20) un perçage axial (22) comprenant un conduit d'alimentation de pistons, et comportant un embout (14) d'un tube de pression hydraulique serré par une face avant sur le plan du récepteur (20) pour transmettre un fluide au conduit d'alimentation, la face avant de l'embout (14) comportant un plot cylindrique (40) s'ajustant dans le perçage du plan (20), qui dispose de deux ergots latéraux (42) s'engageant chacun dans une rainure de ce perçage présentant une partie axiale (26) puis une partie tangentielle (28) pour réaliser une avance puis une rotation de l'embout (14), cet embout (14) comportant un dispositif complémentaire de blocage en rotation sur le récepteur (2).

## Description

0001. La présente invention concerne un système de freinage de véhicule automobile comportant un tube de pression hydraulique fixé sur un récepteur de freinage, ainsi qu'un procédé de fixation du tube sur le récepteur et un véhicule automobile équipé d'un tel système de freinage.

0002. Un type de système de freinage de véhicule automobile connu, présenté notamment par le document CN-U-205872035, comporte un étrier de frein recevant un tube de freinage flexible se terminant par une partie rigide fixée latéralement sur un embout cylindrique disposant d'un perçage axial.

0003. L'étrier de frein comporte un perçage étagé formé sur un plan, dans une direction avant, comprenant une partie filetée, puis au fond un conduit de liaison alimentant la chambre des pistons de serrage du disque de frein. 0004. Une vis de serrage de l'embout sur le plan de l'étrier comporte en partant de l'avant un perçage axial, se prolongeant sous la tête de vis par un perçage radial disposé au niveau d'une cavité intérieure de l'embout cylindrique.

0005. Le filetage de la vis étant engagé dans la partie filetée du perçage de l'étrier, on obtient un serrage de la face avant de l'embout sur le plan de l'étrier assurant une étanchéité vers l'extérieur, et un passage du fluide sous pression reçu dans la cavité de cet embout, par la partie radiale puis axiale du perçage de la vis afin d'alimenter le conduit relié aux pistons de l'étrier. 0006. L'embout cylindrique comporte de plus une tige fixée radialement sur son côté, présentant un pli à angle droit formant une extrémité axiale engagée dans un perçage du plan de l'étrier, à côté du perçage étagé. 0007. De cette manière on obtient un blocage en rotation de l'embout cylindrique autour de l'axe de la vis de serrage, qui évite dans toutes les conditions de fonctionnement un risque de rotation axiale de cet embout et un desserrage de sa vis.

0008. En particulier les systèmes de freinage des véhicules automobiles sont soumis à des contraintes sévères de pressions et d'efforts mécaniques répétés, de variations fortes de température, et de vibrations qui obligent à prévoir un blocage sécurisé de l'embout du tube flexible sur le dispositif de freinage.

0009. Toutefois ce système de freinage connu nécessite pour l'assemblage en grande série de véhicules automobiles la mise en place de la vis de serrage dans l'embout, son engagement dans le perçage étagé de l'étrier de frein, puis son serrage sur un certain nombre de tours, en contrôlant l'angle et l'effort de serrage afin de garantir un niveau de contrainte mécanique dans les matériaux et la qualité du montage suivant les tolérances demandées. 0010. Ces différentes opérations peuvent présenter des erreurs, en particulier dans les mesures de l'angle de rotation et du couple de serrage, nécessitent deux pièces principales, l'embout et la vis percée, et prennent du temps ce qui entraîne des coûts.

0011. La présente invention a notamment pour but d'éviter ces problèmes de l'art antérieur.

0012. Elle propose à cet effet un système de freinage de véhicule automobile comportant un récepteur de freinage présentant sur un plan un perçage axial comprenant un conduit d'alimentation de pistons, et comportant un embout d'un tube de pression hydraulique serré par une face avant sur le plan du récepteur pour transmettre un fluide au conduit d'alimentation, ce système de freinage étant remarquable en ce que la face avant de l'embout comporte un plot cylindrique s'ajustant dans le perçage du plan, qui dispose de deux ergots latéraux s'engageant chacun dans une rainure de ce perçage présentant une partie axiale puis une partie tangentielle pour réaliser une avance puis une rotation de l'embout, et en ce que cet embout comporte un dispositif complémentaire de blocage en rotation sur le récepteur.

0013. Un avantage de ce système de freinage est que par un mouvement simple, en descendant le plot cylindrique dans le perçage du récepteur avec un engagement des ergots latéraux dans la partie axiale des rainures, puis après une rotation de l'embout pour engager ces ergots dans la partie tangentielle, on obtient un montage rapide du type baïonnette, donnant un centrage de l'embout puis son blocage axial.

0014. Ensuite la mise en place du dispositif de blocage de l'embout sur le récepteur verrouille sa position angulaire en empêchant une rotation inverse, ce qui évite un desserrage accidentel du raccordement entraînant une perte du freinage.

0015. Le montage de l'embout sur le récepteur se fait sans utiliser de vis principale percée nécessitant une mise en place et un contrôle du serrage en couple et en angle, ce qui est plus rapide et évite des risques d'erreurs. 0016. De plus l'embout avec son propre plot cylindrique réalisant les fonctions de centrage et de serrage sur le récepteur, à la place de la vis percée utilisée auparavant, on supprime cette vis ce qui simplifie les approvisionnements et réduit les temps d'assemblage en série des véhicules.

0017. Le système de freinage selon l'invention peut comporter de plus une ou plusieurs des caractéristiques suivantes, qui peuvent être combinées entre elles.

0018. Avantageusement, le dispositif de blocage comporte une plaque allongée radialement qui est posée à plat sur le plan du récepteur.

0019. Dans ce cas, avantageusement la plaque comporte à son extrémité un perçage secondaire.

0020. De plus, le perçage secondaire peut recevoir une vis ou une goupille engagée sur le récepteur.

0021. Avantageusement, l'embout comporte vers l'arrière une forme permettant une prise par une clé de serrage.

0022. Avantageusement, le système de freinage comporte un joint d'étanchéité disposé entre l'embout et le récepteur.

0023. En particulier, le joint d'étanchéité peut présenter une forme annulaire engagée dans une gorge du plot cylindrique en avant des ergots.

0024. En variante le joint d'étanchéité peut être interposé entre la face avant de l'embout et le plan du récepteur.

0025. L'invention a aussi pour objet un procédé d'assemblage d'un système de freinage comprenant l'une quelconque des caractéristiques précédentes, remarquable en ce qu'il comporte un mouvement d'avance axiale de l'embout dans le perçage, puis un mouvement de rotation de cet embout, et ensuite une mise en œuvre du dispositif de blocage en rotation.

0026. L'invention a de plus pour objet un véhicule automobile équipé de systèmes de freinage comprenant l'une quelconque des caractéristiques précédentes, remarquable en ce que chaque roue comporte un frein à disques comprenant un étrier formant un récepteur du système de freinage.

0027. L'invention sera mieux comprise et d'autres caractéristiques et avantages apparaîtront plus clairement à la lecture de la description ci-après donnée à titre d'exemple, en référence aux dessins annexés dans lesquels :
[Fig. 1] présente un système de freinage selon l'invention ;
[Fig. 2] présente le perçage sur le plan de l'étrier de frein de ce système ;
[Fig. 3] présente en vue de côté et de dessus l'embout de ce système
[Fig. 4] présente le montage de l'embout sur l'étrier ; et
[Fig. 5] présente le serrage du dispositif de blocage complémentaire.

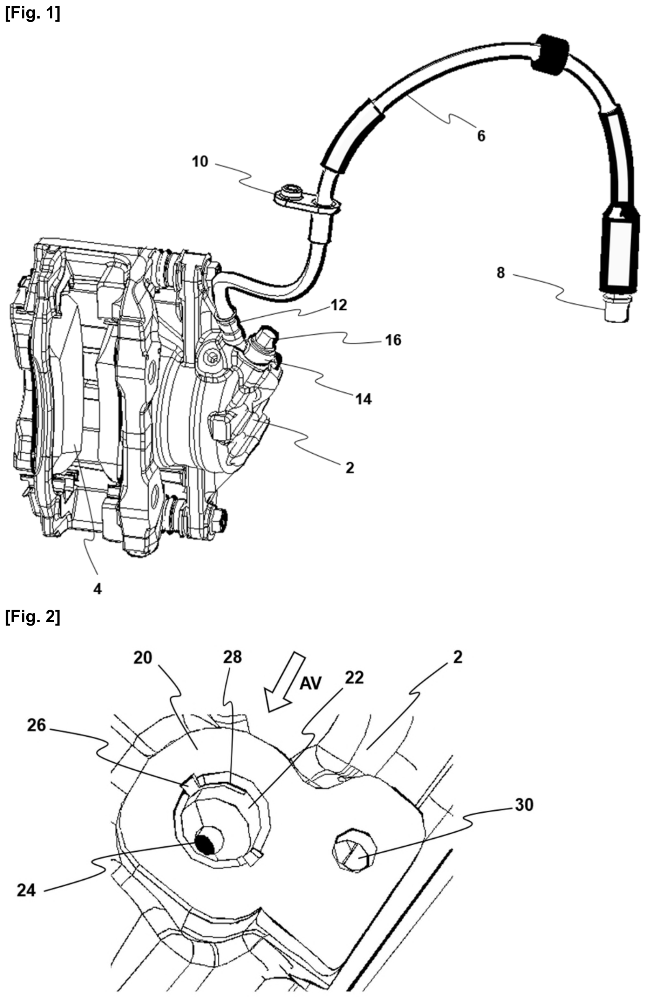

0033. La figure 1 présente un étrier de frein 2 comportant deux garnitures opposées 4 de serrage d'un disque lié en rotation à une roue du véhicule, recevant une pression hydraulique par un tube flexible 6 équipé d'un raccord amont 8, d'une fixation sur la caisse du véhicule 10, et d'une partie finale rigide 12 arrivant radialement sur un embout circulaire 14 fixé par sa face avant sur un plan de l'étrier.

0034. La face arrière de l'embout 14 comporte une forme hexagonale 16 permettant une prise par une clé pour appliquer dessus un couple de rotation lors de son montage.

0035. La figure 2 présente un plan 20 usiné sur une surface supérieure de l'étrier 2, comportant un perçage cylindrique principal 22 disposé suivant une direction axiale avant perpendiculaire au plan, se terminant au fond par un conduit 24 relié aux pistons de serrage des garnitures 4.

0036. Le perçage cylindrique 22 comporte deux rainures opposées comprenant chacune une partie axiale 26 puis une partie tangentielle 28 sur une fraction de tour.

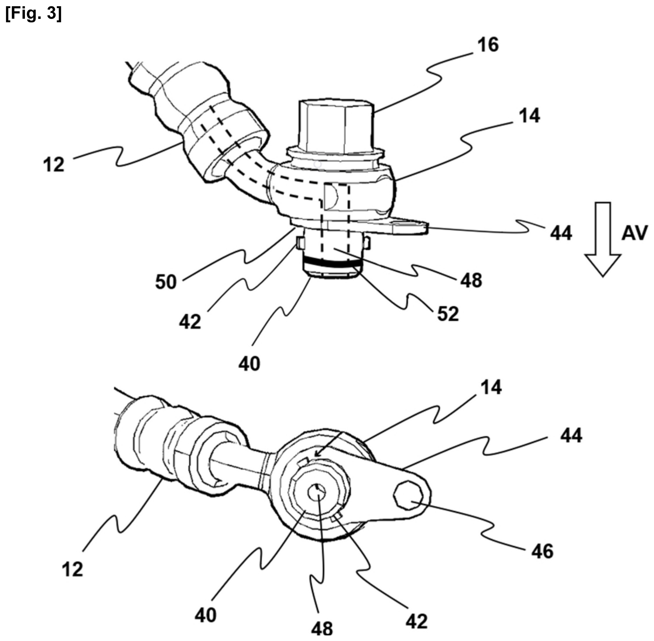

0037. Le plan 20 comporte un perçage secondaire fileté de verrouillage 30 de plus petit diamètre, situé à une distance radiale du perçage principal 22. 0038. La figure 3 présente l'embout cylindrique 14 comportant une face plate avant 50 d'appui sur le plan de l'étrier 20, disposant d'un plot avant cylindrique 40 présentant deux ergots latéraux opposés 42.

0039. Le perçage de la partie finale rigide 12 du tube flexible 6 arrivant sur le côté de l'embout cylindrique 14, se prolonge par un perçage axial 48 de cet embout débouchant sur la face avant du plot cylindrique 40.

0040. La face avant d'appui 50 de l'embout 14 comporte une plaque 44 allongée radialement sur un côté, formant un bras présentant à son extrémité un perçage secondaire de verrouillage 46.

0041. Un joint annulaire souple d'étanchéité 52 est inséré dans une gorge à la base du plot avant 40, en dessous des ergots 42.

0042. En variante, un joint d'étanchéité plat peut être interposé entre la face avant 50 de l'embout 14 et le plan du récepteur 20.

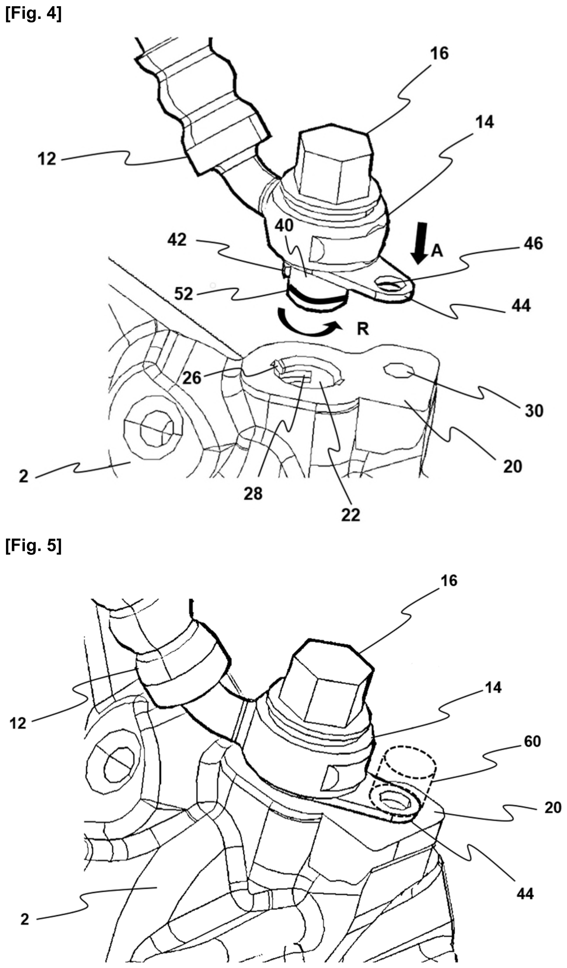

0043. La figure 4 présente l'assemblage de l'embout 14 sur l'étrier de frein 2, comprenant l'avance axiale A du plot cylindrique 40 dans le perçage 22 en ajustant chaque ergot 42 dans la partie axiale d'une rainure 26, et ensuite la rotation R de cet embout qui glisse ses ergots dans la partie tangentielle 28 en assurant un blocage axial du montage.

0044. Le joint annulaire 52 passé en dessous des rainures 26, 28, porte sur une partie cylindrique continue du perçage 22 ce qui assure une étanchéité entre ce perçage et l'embout 14.

0045. La figure 5 présente l'insertion d'une vis 60 dans le perçage secondaire 46 de la plaque 44, qui est vissée dans le perçage secondaire 30 pour former un verrouillage en rotation de l'embout 14.

0046. En variante on peut utiliser tout autre dispositif de verrouillage en rotation de l'embout 14, comprenant par exemple une goupille qui s'ajuste à la fois dans un perçage de cet embout et de l'étrier 2.

0047. On obtient avec un embout 14 formant un seul élément principal, et avec un élément complémentaire simple pour le dispositif de verrouillage en rotation réalisé de manière économique, comme une vis ou une goupille, un raccordement sans risque d'erreur de montage, disposant d'un nombre réduit de composants et présentant un temps d'assemblage qui est court.

## Revendications

1. Système de freinage de véhicule automobile comportant un récepteur de freinage (2) présentant sur un plan (20) un perçage axial (22) comprenant un conduit d'alimentation (24) de pistons, et comportant un embout (14) d'un tube de pression hydraulique (6) serré par une face avant (54) sur le plan du récepteur (20) pour transmettre un fluide au conduit d'alimentation (24), **caractérisé en ce que** la face (50) avant de l'embout (14) comporte un plot cylindrique (40) s'ajustant dans le perçage du plan (22), qui dispose de deux ergots latéraux (42) s'engageant chacun dans une rainure de ce perçage présentant une partie axiale (26) puis une partie tangentielle (28) pour réaliser une avance (A) puis une rotation (R) de l'embout (14), et **en ce que** cet embout (14) comporte un dispositif complémentaire de blocage en rotation sur le récepteur (2).

2. Système de freinage selon la revendication 1, **caractérisé en ce que** le dispositif de blocage comporte une plaque allongée radialement (44), qui est posée à plat sur le plan du récepteur (20).

3. Système de freinage selon la revendication 2, **caractérisé en ce que** la plaque comporte à son extrémité un perçage secondaire (46).

4. Système de freinage selon la revendication 3, **caractérisé en ce que** le perçage secondaire (46) reçoit une vis (60) ou une goupille engagée sur le récepteur (2).

5. Système de freinage selon l'une quelconque des revendications précédentes, **caractérisé en ce que** l'embout (14) comporte vers l'arrière une forme (16) permettant une prise par une clé de serrage.

6. Système de freinage selon l'une quelconque des revendications précédentes, **caractérisé en ce qu'**il comporte un joint d'étanchéité (52) disposé entre l'embout (14) et le récepteur (2).

7. Système de freinage selon la revendication 6, **caractérisé en ce que** le joint d'étanchéité (52) présente une forme annulaire engagée dans une gorge du plot cylindrique (40) en avant des ergots (42).

8. Système de freinage selon la revendication 6, **caractérisé en ce que** le joint d'étanchéité est interposé entre la face avant (50) de l'embout (14) et le plan du récepteur (20).

9. Procédé d'assemblage d'un système de freinage selon l'une quelconque des revendications précédentes, **caractérisé en ce qu'**il comporte un mouvement d'avance axiale (A) de l'embout (14) dans le perçage (22), puis un mouvement de rotation (R) de cet embout (14), et ensuite une mise en œuvre du dispositif de blocage en rotation.

10. Véhicule automobile équipé de systèmes de freinage selon l'une quelconque des revendications 1 à 7, **caractérisé en ce que** chaque roue comporte un frein à disques comprenant un étrier formant un récepteur du système de freinage.
